# EUROPÄISCHE PATENTSCHRIFT

(11) **EP 3 607 859 B1**
(45) Veröffentlichungstag und Bekanntmachung des Hinweises auf die Patenterteilung: **09.08.2023**
(21) Anmeldenummer: 19186536.9
(22) Anmeldetag: 16.07.2019
(51) Int. Cl.: A47J 31/44

(54) **WÄRMETAUSCHER FÜR EINE GETRÄNKEZUBEREITUNGSVORRICHTUNG**
HEAT EXCHANGER FOR A BEVERAGE PREPARATION APPARATUS
ÉCHANGEUR DE CHALEUR POUR UN DISPOSITIF DE PRÉPARATION DE BOISSONS

(30) Priorität: 07.08.2018 DE 102018119161
(43) Veröffentlichungstag der Anmeldung: 12.02.2020
(73) Patentinhaber: FRANKE Kaffeemaschinen AG, 4663 Aarburg (CH)
(72) Erfinder: Vetterli, Heinz, 8855 Wangen (CH); Turi, Mariano, 8046 Zürich (CH)
(74) Vertreter: LBP Lemcke, Brommer & Partner Patentanwälte mbB

(56) Entgegenhaltungen:
- EP-A1- 1 302 140
- US-A1- 2002 130 137
- US-A1- 2015 272 382

## Beschreibung

Die vorliegende Erfindung betrifft einen Wärmetauscher für eine Getränkezubereitungsvorrichtung zur Zubereitung frisch gebrühter, gekühlter Getränke. Daneben betrifft die Erfindung eine solche Getränkezubereitungsvorrichtung zur Zubereitung frisch gebrühter, gekühlter Getränke mit einem Wärmetauscher.

Bekannt sind Getränkezubereitungsvorrichtungen, die portionsweise frisch gebrühte Heißgetränke wie Tee oder Kaffee zubereiten und ausgeben. Um eine größere Produktvielfalt anbieten zu können, besteht daneben auch der Wunsch, gekühlte Kaffee- oder Teegetränke zubereiten und ausgeben zu können. Meist wird hierbei jedoch auf Instantgetränke zurückgegriffen.

Aus der EP 2 278 240 A2 ist eine Vorrichtung zum Zubereiten von frisch gebrühtem, gekühltem Kaffee bekannt. Hierbei wird der frisch gebrühte Kaffee aus einer Brühvorrichtung über einen Wärmetauscher abgekühlt. Als Kühlwasser dient vorgekühltes Leitungswasser, welches bei der Abkühlung des frisch gebrühten, heißen Kaffees erwärmt und zur Zubereitung weiterer Kaffeegetränke wieder der Brühvorrichtung zugeführt wird.

Die US 2002/130137 beschreibt einen Kühler zur Abkühlung von heißem Kaffee. Der Kühler besitzt ein Außenrohr 30 und ein konzentrisches Innenrohr 31. Das Innenrohr 31 dient hierbei als Füllkörper, damit der heiße Kaffee dicht an der Außenwand entlang strömt. Die Kühlung des Außenrohrs erfolgt von außen z.B. mit kaltem Wasser. Um das Innenrohr ist ein Draht gewunden, der den Ringraum zwischen Innenrohr und Außenrohr ausfüllt, sodass der heiße Kaffee entlang der Außenwand schraubenlinienförmig in den Zwischenräumen zwischen den Drahtwindungen fließen muss. Der Strömungsweg verlängert sich dadurch gegenüber der Länge des Außenrohres um ein Vielfaches.

Bei einer solchen Vorrichtung zur Ausgabe von frisch gebrühtem, kaltem Kaffee besteht einerseits der Wunsch nach einem möglichst kurzen Strömungsweg, andererseits nach einer möglichst starken Abkühlung und einem hohen Grad an Wärmerückgewinnung im Kühlwasser, welches für den nächsten Brühvorgang verwendet wird. Ein längerer Strömungsweg durch den Wärmetauscher erhöht die Vorlaufzeit bis zur Ausgabe des gekühlten Kaffeegetränks und vergrößert das Restvolumen an Kaffeegetränk, welches im Wärmetauscher verbleibt. Ein kürzerer Strömungsweg verringert hingegen die Effizienz des Wärmeaustauschs.

Eine Aufgabe der Erfindung besteht daher darin, einen verbesserten Wärmetauscher für eine Getränkezubereitungsvorrichtung der eingangs genannten Art anzugeben.

Die Aufgabe wird gelöst durch die Merkmale des Anspruchs 1. Eine Getränkezubereitungsvorrichtung mit einem derartigen Wärmetauscher ist in Anspruch 6 angegeben. Vorteilhafte Ausgestaltungen sind den abhängigen Ansprüchen zu entnehmen.

Bei einem Wärmetauscher mit einem vom zu kühlendem Getränk durchströmbaren inneren Strömungsweg und einem um den inneren Strömungsweg angeordneten äußeren Strömungsweg, bei dem ein Ringraum zwischen innerem Strömungsweg und äußerem Strömungsweg von Kühlflüssigkeit durchströmbar ist und wobei innerer und äußerer Strömungsweg fluidisch getrennt sind aber in gegenseitigem thermischem Kontakt stehen, ist ein in dem inneren Strömungsweg angeordneter, langgestreckter und sich in Strömungsrichtung erstreckender Innenkörper vorgesehen, der von der zu kühlenden Flüssigkeit innerhalb des inneren Strömungswegs umströmbar ist. Der Innenkörper erstreckt sich vorzugsweise über die gesamte Länge des inneren Strömungsweges. Durch den Innenkörper wird einerseits das Volumen im inneren Strömungsweg verringert, andererseits wird der Wärmeübergang verbessert, da die zu kühlende Flüssigkeit durch den Spalt zwischen Innenkörper und Innenwandung des inneren Strömungswegs fließen muss und somit in besserem thermischen Kontakt mit der im äußeren Strömungsweg fließenden Kühlflüssigkeit steht.

Der Wärmetauscher ist bevorzugt jedoch nicht notwendig als Röhrenwärmetauscher ausgeführt. Somit können der innere und der äußere Strömungsweg rohrförmig ausgebildet sein, insbesondere als ein Innenrohr und ein dieses (koaxial) umgebendes, äußeres Mantelrohr.

Erfindungsgemäß ist der Innenkörper in Form eines langgestreckten Fadens, Drahts oder Stabes aus einem lebensmittelechten Kunststoff wie etwa PTFA (Teflon) oder Silikon ausgeführt. Auf Grund der flexiblen Eigenschaft des Kunststoffes kann der Wärmetauscher in nahezu beliebiger Weise gebogen werden, beispielsweise platzsparend in Form einer Helix aufgewunden sein. Wenn der Innenkörper hierbei stellenweise Kontakt mit der Innenwandung des Innenrohres hat, so ist dies nicht weiter beeinträchtigend. Möglich wäre auch, den Innenkörper in regelmäßigen Abständen mit Abstandshaltern zu versehen, die für einen konstanten Abstand des Innenkörpers von der Innenwandung des Innenrohres sorgen.

Die Länge des Wärmetauschers, also die Länge von Innenrohr und Mantelrohr, respektive innerem und äußerem Strömungsweg beträgt vorzugsweise zwischen 2 m und 6 m, weiter bevorzugt zwischen 3 m und 5 m. Das freie, von Flüssigkeit durchströmbare Volumen des Innenrohrs beträgt vorzugsweise weniger als 1 dl, weiter bevorzugt weniger als 0,5 dl und höchst vorzugsweise weniger als 0,2 dl. Somit verbleibt lediglich ein geringes Restvolumen im Strömungsweg des Wärmetauschers. Das geringe Füllvolumen in Kombination mit der sich ergebenden großen Oberfläche sorgt für einen effizienten Wärmeübergang. Andererseits bleibt die Vorlaufzeit, welche bei einer bevorzugten Ausführungsform lediglich im Bereich von 2 bis 3 sec. liegt, vergleichsweise kurz.

Bei einer Getränkezubereitungsvorrichtung mit einem Wärmetauscher der vorstehend beschriebenen Art ist das Mantelrohr des Wärmetauschers, respektive dessen äußerer Strömungsweg, mit einer Frischwasserzufuhr verbindbar, sodass der Ringraum zwischen Innenrohr und Mantelrohr von Frischwasser durchströmt werden kann. Entsprechend ist das Innenrohr, respektive dessen innerer Strömungsweg, mit einer Brühvorrichtung verbindbar, sodass das Innenrohr von frisch gebrühtem Getränk durchströmt werden kann. Vorzugsweise wird das durch den Ringraum des Mantelrohrs strömende Frischwasser hierbei einem Heißwasserzubereiter zugeleitet, in welchem es zur Zubereitung nachfolgender Getränke vorgehalten wird. Die Verbindung des Mantelrohrs mit der Frischwasserzufuhr bzw. des Innenrohrs mit der Brühvorrichtung erfolgt geeigneter Weise durch entsprechende Wegeventile. Um einen möglichst vollständigen Wärmeübergang von dem frisch gebrühten Heißgetränk an das Kühlwasser zu erreichen, wird zweckmäßiger Weise der Wärmetauscher in Gegenstromrichtung betrieben, d.h. die Strömungsrichtungen von Kühlflüssigkeit und zu kühlendem Heißgetränk sind gegenläufig.

Bei einer besonders bevorzugten Ausführungsform sind die Volumina an Kühlflüssigkeit und zu kühlendem Heißgetränk, die pro Zeiteinheit durch den Wärmetauscher strömen, im Wesentlichen gleich groß, d.h. dem Heißwasserbereiter wird zum Brühen eines Heißgetränks genauso viel Heißwasser entnommen, wie ihm an Frischwasser über den Kühlmittelkreislauf des Wärmetauschers wieder zugeführt wird. Dies kann beispielsweise dadurch erreicht werden, dass der Kühlmittelkreislauf des Wärmetauschers sich im Zulauf einer Wasserpumpe befindet, deren Druckanschluss mit dem Heißwasserbereiter verbunden ist und welche gleichzeitig durch Druckbeaufschlagung des Heißwasserbereiters Heißwasser zur Brühvorrichtung fördert. Das von der Wasserpumpe geförderte Wasservolumen, welches zuvor durch den Kühlkreis des Wärmetauschers geflossen ist, entspricht hierbei dem Volumen an Heißwasser, welches die Wasserpumpe durch Druckbeaufschlagung des Heißwasserbereiters zur Brühvorrichtung fördert.

Hinter der Brühvorrichtung befindet sich vorzugsweise ein Wegeventil, über das die Brühvorrichtung ausgangsseitig wahlweise direkt mit einem Getränkeauslauf verbunden werden kann, um frisch gebrühte, heiße Getränke auszugeben, oder alternativ mit dem Wärmetauscher, genauer mit dessen Innenrohr, um frisch gebrühte, gekühlte Getränke auszugeben.

Weitere Vorteile und Ausgestaltungen sind der nachfolgenden Beschreibung von Ausführungsbeispielen anhand der Figuren zu entnehmen. Es zeigt:
- Figur 1: eine schematische Darstellung eines im Gegenstrom betriebenen nicht erfindungsgemässen Röhrenwärmetauschers,
- Figur 2: eine schematische Schnittdarstellung eines erfindungsgemässen Röhrenwärmetau-schers mit axial verlaufendem Innenkörper und
- Figur 3: ein Wasserlaufschema einer Getränkezubereitungsvorrichtung zur Zubereitung frisch gebrühter, gekühlter Getränke.

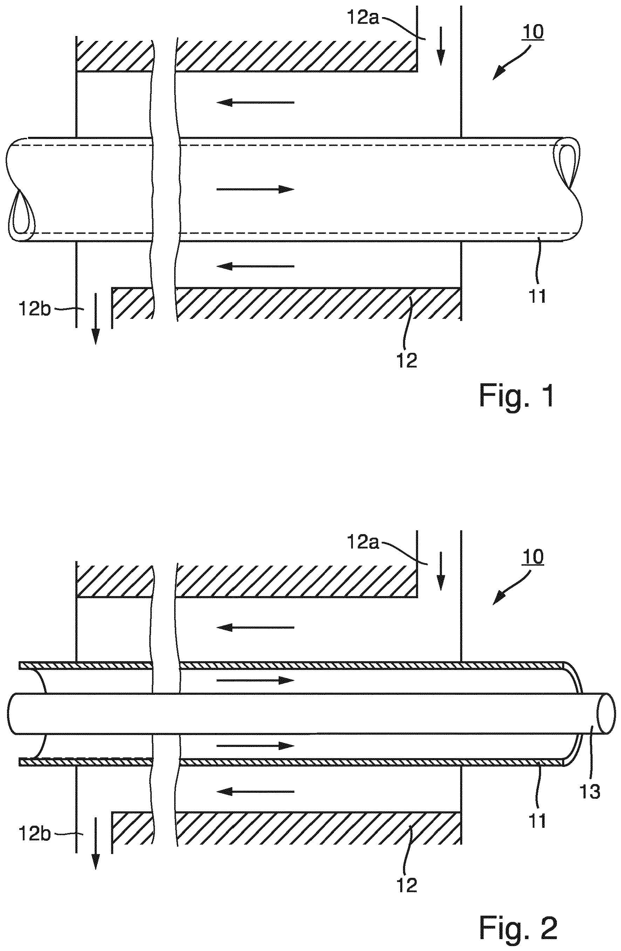

Der in Fig. 1 dargestellte Wärmetauscher 10 besitzt ein Innenrohr 11 sowie ein koaxial um dieses angeordnetes äußeres Mantelrohr 12. Das Mantelrohr 12 ist stirnseitig verschlossen, sodass nur die Enden des Innenrohres 11 herausragen. Das Mantelrohr 12 hat an seinen beiden Enden axial in das Mantelrohr mündende Zu- und Abläufe 12a, 12b. Durch das Innenrohr 11 fließt in Pfeilrichtung eine zu kühlende Flüssigkeit. Durch das Mantelrohr 12 fließt in Gegenrichtung Frischwasser, welches als Kühlmittel dient, und umströmt die Außenwandung des Innenrohres 11, so dass über das Innenrohr 11 thermischer Kontakt zu der Kühlflüssigkeit im Mantelrohr 12 besteht. Auf seinem Weg durch das Innenrohr 11 gibt die zu kühlende Flüssigkeit, also das frisch gebrühte, heiße Getränk, ihre Wärme an das Kühlwasser im Mantelrohr 12 ab, welches hierdurch erwärmt wird.

In einer beispielhaften Konfiguration beträgt der Innendurchmesser des Innenrohres 11 3 mm bei einer Wandstärke von 0,5 mm. Der Innendurchmesser des Mantelrohres 12 beträgt 5 mm. Die Rohrlänge beträgt in etwa 10 m. Hieraus ergibt sich ein durchströmbares Volumen des Innenrohres 11 von 0,7 dl. Der Volumenstrom von Heißgetränk im Inneren des Innenrohres 11 und von Kühlwasser im Mantelrohr 12 sind gleich groß gewählt. Leitet man durch das Innenrohr 11 frisch gebrühten Kaffee mit einer Temperatur von 90°C und durch das Mantelrohr 12 Kühlwasser bei Zimmertemperatur von 20°C, so erreicht man eine Endtemperatur des Kaffees von 25°C und eine Erwärmung des Kühlwassers auf 85°C. Die Durchlaufzeit beträgt 10 sec.

In Fig. 2 ist eine erfindungsgemässe Ausführungsform eines Röhrenwärmetauschers 10 gezeigt. Auch dieser besitzt ein Innenrohr 11 und ein koaxial um dieses angeordnetes Mantelrohr 12. Das Innenrohr 11 wird wieder von zu kühlender Flüssigkeit durchströmt. Durch den Ringspalt zwischen Mantelrohr 12 und Innenrohr 11 fließt zur Kühlung Frischwasser. Im Unterschied zu Fig. 1 ist innerhalb des Innenrohrs 11 ein koaxial zu diesem verlaufender Innenkörper 13 angeordnet. Bei diesem kann es sich um einen Faden, Draht oder Stab handeln. Er reduziert das Innenvolumen des Innenrohrs 11 und führt zu einem besseren Wärmeübergang, da die zu kühlende Flüssigkeit stets in der Nähe der Rohrwandung, jedoch nicht im Bereich der Mittelachse strömen kann.

In der beispielhaft gezeigten Konfiguration beträgt der Innendurchmesser des Innenrohrs 11 wieder 3 mm. Die Wandstärke des Innenrohrs 11 ist auf 0,3 mm reduziert um einen besseren Wärmeübergang zu erzielen. Der Innenkörper 13 hat einen Durchmesser von 2 mm. Der Innendurchmesser des Mantelrohres beträgt 4,7 mm. Die Rohrlänge ist auf 4,2 m gewählt. Hieraus ergibt sich ein von Flüssigkeit durchströmbares Volumen innerhalb des Innenrohrs 11 von lediglich 0,16 dl. Bei einer Durchlaufzeit von lediglich 2,3 sec. für 1 dl Flüssigkeit wird in der gewählten Konfiguration eine Abkühlung eines Kaffeegetränks von 90°C auf 25°C und eine Erwärmung des Kühlwassers von 20°C auf 85°C erreicht.

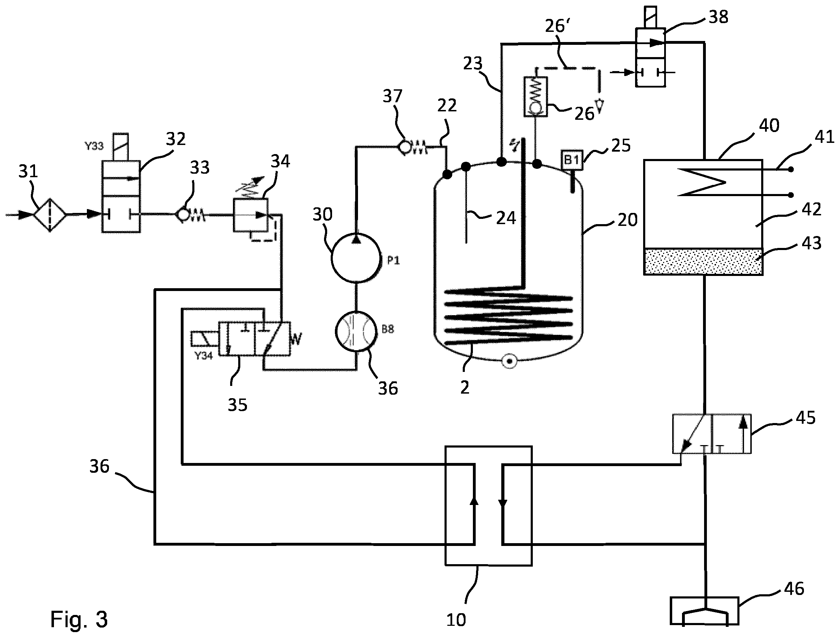

Die in Fig. 3 in Form eines Wasserlaufschemas dargestellte Getränkezubereitungsvorrichtung besitzt einen Heißwasserbereiter 20 in Form eines Boilers mit einer darin angeordneten Heizung 21, einer Zuleitung 22, einer Entnahmeleitung 23, einem Füllstandsensor 24, einem Temperatursensor 25 sowie einem Sicherheits- bzw. Überdruckventil 26. Letzteres dient dazu, ein Bersten des Boilers 20 auf Grund von Wärmeausdehnung des darin erhitzten Wassers zu verhindern, indem bei Überschreiten eines zulässigen Maximaldrucks das Überdruckventil 26 öffnet und Wasser aus dem Boiler über eine gestrichelt gezeichnete Leitung 26' entweichen lässt.

Zulaufseitig ist an den Heißwasserbereiter 20 eine Wasserpumpe 30 angeschlossen, die Frischwasser von einem Leitungswasseranschluss 31 in den Heißwasserspeicher 20 pumpt, um diesen bei Entnahme von Heißwasser nachzufüllen und den Wasserdruck ausgangsseitig des Heißwasserspeichers 20 aufrecht zu erhalten. Hinter dem Leitungswasseranschluss 31 befindet sich ein Absperrventil 32, mit dem die Vorrichtung vom Leitungsnetz getrennt werden kann. Außerdem befindet sich im Wasserzulauf ein Rückschlagventil 33 und ein Druckreduzierventil 34, welches den Leitungsdruck auf einen voreingestellten Wert von etwa 0,3 bar bis 1,0 bar begrenzt.

Hinter dem Druckreduzierventil 34 befindet sich ein Umschaltventil 35 (3/2-Wegeventil), mit dem die Frischwasserzuleitung entweder direkt mit der Wasserpumpe 30 verbunden werden kann, oder alternativ über den Kühlmittelkreis eines Wärmetauschers 10 zu der Wasserpumpe 30 umgeleitet wird. Hierzu zweigt hinter dem Druckreduzierventil 34 eine Zweigleitung 36 ab, die zu dem Kühlmittelkreis des Wärmetauschers 10 führt. Die entsprechende Rückleitung wird über das Wegeventil 35 in dessen umgeschalteter Schaltstellung mit der Pumpe 30 verbunden.

Vor der Pumpe 30 bzw. zwischen Wegeventil 35 und Pumpe 30 kann sich optional noch ein Durchflussmesser 36 befinden. Dieser dient dazu, die von der Pumpe beförderte Wassermenge zur Dosierung des ausgegebenen Heißwassers zu messen. Zudem befindet sich zwischen dem druckseitigen Anschluss der Wasserpumpe 30 und dem Wasserzulauf 22 des Boilers 20 ein Rückschlagventil 37, welches verhindert, dass im Falle eines Druckanstiegs im Inneren des Boilers 20, beispielsweise beim Aufheizen mittels der Heizung 21, Wasser zum Zulauf 22 zurückströmen kann.

An der Entnahmeleitung 23 des Boilers, über die Heißwasser entnommen werden kann, ist über ein Magnetventil 38 eine Brühvorrichtung 40 angeschlossen. Über das geöffnete Magnetventil 38 kann bei eingeschalteter Wasserpumpe 30 Heißwasser aus dem Boiler 20 zu der Brühvorrichtung 40 gefördert werden. Eine solche Brühvorrichtung wird häufig auch als Brühgruppe bezeichnet. Sie umfasst in an sich bekannter Weise eine Heizung 41, mit der die Brühgruppe 40 vorgewärmt werden kann, und eine Brühkammer 42, in die portioniertes, frisch gemahlenes Kaffeepulver 43 eingefüllt wird. Eine Brühgruppe, die im Rahmen der vorliegenden Erfindung eingesetzt werden kann, ist beispielsweise in der EP 2 561 778 A1 beschrieben, auf die zur Meidung unnötiger Wiederholungen hiermit vollinhaltlich Bezug genommen wird.

Die Brühgruppe 40 ist so ausgestaltet, dass sie geöffnet werden kann, um eine portionierte Menge Kaffeepulver 43 einzufüllen, welches zuvor in einer Mühle des Getränkeautomaten portionsweise frisch gemahlen wurde. Außerdem kann bei geöffneter Brühgruppe 40 nach dem Brühvorgang der verbliebene Kaffeesatz in einen Tresterbehälter ausgeworfen werden. Die Brühgruppe 40 weist außerdem einen beweglichen Kolben auf (nicht dargestellt), der das eingefüllte Kaffeepulver 43 gegen ein in der Brühkammer 41 befindliches Brühsieb verdichtet. Nach Zurückfahren des Kolbens kann das so verdichtete Kaffeepulver 43 von dem unter dem Druck der Pumpe 30 stehenden Brühwasser aus dem Boiler 20 durchströmt werden.

Selbstverständlich kann anstatt einer wie hier gezeigten Brühgruppe 40 auch eine Brühvorrichtung zum Einsatz kommen, die zur Aufnahme sogenannter Kaffeekapseln oder Kaffeepads ausgebildet ist.

Der fertig gebrühte Kaffee wird von der Brühgruppe 40 über eine Auslassleitung und ein Wegeventil 45 entweder direkt zu einem Auslauf 46 für Kaffeegetränke geleitet, oder von dem Wegeventil 45 über den Wärmetauscher 10 zu dem Auslauf 46.

Die Funktionsweise der im Ausführungsbeispiel gezeigten Getränkezubereitungsvorrichtung ist folgendermaßen: zur Ausgabe frisch gebrühten, heißen Kaffees wird das Absperrventil 32 geöffnet und das Wegeventil 35 in die in Fig. 3 rechte Schaltstellung gebracht, sodass die Frischwasserzufuhr 31 direkt mit der Wasserpumpe 30 verbunden ist. Die Wasserpumpe 30 wird angeschaltet, sodass Frischwasser zu dem Boiler 20 gefördert wird, der somit unter Pumpendruck steht. Das Absperrventil 38 wird geöffnet, sodass Heißwasser zu der Brühvorrichtung 40 gelangt, in der eine darin eingefüllte Portion frisch gemahlenen Kaffeepulvers aufgebrüht wird. Das Wegeventil 45 ist in die in der Fig. 3 rechte Schaltstellung geschaltet, sodass der Auslass der Brühvorrichtung 40 direkt mit dem Getränkeauslauf 46 verbunden ist. Der frisch gebrühte heiße Kaffee wird somit aus dem Getränkeauslauf ausgegeben.

Zur Zubereitung frisch gebrühten, gekühlten Kaffeegetränks wird das Wegeventil 35 in seine in Fig. 3 linke Schaltstellung gebracht, sodass die Frischwasserzufuhr 31 zunächst über den Kühlmittelkreis, also das in Fig. 2 gezeigte äußere Mantelrohr 12 des Wärmetauschers 10, geleitet wird, bevor es über das Wegeventil 35 zu der Wasserpumpe 30 gelangt. Das Wegeventil 45 wird in seine in Fig. 3 linke Schaltstellung gebracht, sodass frisch gebrühtes, heißes Kaffeegetränk über den Wärmetauscher 10 zum Getränkeauslauf 46 gelangt. Somit wird das heiße Kaffeegetränk im Wärmetauscher 10 durch das von der Frischwasserzufuhr 31 kommende kalte Frischwasser gekühlt. Das Frischwasser wird seinerseits durch das heiße Kaffeegetränk erwärmt und in den Boiler 20 geleitet, wo es für den nächsten Brühvorgang bereitgehalten wird. Somit wird bei der Ausgabe eines frisch gebrühten, kalten Getränks die beim Brühvorgang anfallende Abwärme zurückgewonnen und das in den Boiler 20 nachgefüllte Frischwasser vorgewärmt. Das von der Pumpe durch den Wärmetauscher geleitete Volumen an Frischwasser entspricht dem Volumen des zubereiteten Kaffeegetränks, beispielsweise werden 1 dl frisch gebrühter Kaffee von 1 dl Frischwasser gekühlt. Auf Grund des geringen durchströmbaren Volumens des Innenrohrs 11 des Wärmetauschers 10 verbleibt lediglich eine geringe Restmenge Kaffeegetränk im Wärmetauscher 10. Die Durchlaufzeit des Kaffeegetränks beträgt auf Grund der vergleichsweise kurzen Länge des Wärmetauschers 10 lediglich wenige Sekunden.

Um das Kaffeegetränk auf noch tiefere Temperaturen herunter zu kühlen, kann das zur Kühlung verwendete Frischwasser zusätzlich über eine weitere, hier nicht gezeigte Kühlvorrichtung vorgekühlt werden, beispielsweise über einen Peltier-Kühler oder eine Kompressor-/Verdampfer-Kühlanlage.

## Patentansprüche

1. Wärmetauscher (10) für eine Getränkezubereitungsvorrichtung zur Zubereitung frisch gebrühter, gekühlter Getränke, mit einem vom zu kühlendem Getränk durchströmbaren inneren Strömungsweg (11) und einem um den inneren Strömungsweg (11) angeordneten äußeren Strömungsweg (12), wobei ein Ringraum zwischen innerem Strömungsweg (11) und äußerem Strömungsweg (12) von Kühlflüssigkeit durchströmbar ist und wobei innerer (11) und äußerer (12) Strömungsweg fluidisch getrennt sind aber in gegenseitigem thermischem Kontakt stehen, und mit einem in dem inneren Strömungsweg (11) angeordneten und sich in Strömungsrichtung erstreckenden Innenkörper (13), der von der zu kühlenden Flüssigkeit innerhalb des inneren Strömungswegs (11) umströmbar ist,
**dadurch gekennzeichnet, dass**
der Innenkörper (13) aus einem lebensmittelechten, flexiblen Kunststoff besteht und der Wärmetauscher platzsparend gebogen ist, insbesondere in Form einer Helix aufgewunden ist.

2. Wärmetauscher (10) nach Anspruch 1, welcher als Röhrenwärmetauscher ausgeführt ist, bei dem der innere (11) und der äußere (12) Strömungsweg rohrförmig ausgebildet sind, insbesondere als ein Innenrohr und ein dieses vorzugsweise koaxial umgebendes äußeres Mantelrohr.

3. Wärmetauscher (10) nach Anspruch 1 oder 2, bei dem der Innenkörper (13) aus PFTO oder Silikon, besteht.

4. Wärmetauscher (10) nach einem der vorangehenden Ansprüche, bei dem die Länge der inneren (11) und äußeren (12) Strömungswege des Wärmetauschers (10) weniger als 10 m, vorzugsweise zwischen 6 m und 2 m, höchstvorzugsweise zwischen 5 und 3 m beträgt.

5. Wärmetauscher (10) nach einem der vorangehenden Ansprüche, bei dem das freie, von Flüssigkeit durchströmbare Volumen des inneren Strömungsweges (11) weniger als 1 dl, vorzugsweise weniger als 0,5 dl und höchstvorzugsweise weniger als 0,2 dl beträgt.

6. Getränkezubereitungsvorrichtung zur Zubereitung frisch gebrühter, gekühlter Getränke, mit einem Wärmetauscher (10) nach einem der vorangehenden Ansprüche, bei dem der äußere Strömungsweg (12) mit einer Frischwasserzufuhr (31) verbindbar ist, sodass der Ringraum zwischen innerem Strömungsweg (11) und äußere Strömungsweg (12) von Frischwasser durchströmt werden kann, und bei dem der innere Strömungsweg (11) mit einer Brühvorrichtung (40) verbindbar ist, sodass der innere Strömungsweg (11) von frisch gebrühtem Getränk durchströmt werden kann.

7. Getränkezubereitungsvorrichtung nach Anspruch 6, bei der durch den Ringraum strömendes Frischwasser einem Heißwasserbereiter (20) zugeleitet wird, in welchem es zur Zubereitung nachfolgender Getränke vorgehalten wird.

8. Getränkezubereitungsvorrichtung nach Anspruch 6 oder 7, bei der das pro Zeiteinheit durch den Ringraum strömende Wasservolumen dem Getränkevolumen entspricht, welches in derselben Zeit durch das Innenrohr (11) strömt.

9. Getränkezubereitungsvorrichtung nach einem der Ansprüche 6 bis 8, bei der ein Kühlmittelkreislauf des Wärmetauschers (10) sich im Zulauf einer Wasserpumpe (30) befindet, deren Druckanschluss mit dem Heißwasserbereiter (20) verbunden ist und welche gleichzeitig durch Druckbeaufschlagung des Heißwasserbereiters (20) Heißwasser zur Brühvorrichtung (40) fördert.

10. Getränkezubereitungsvorrichtung nach einem der Ansprüche 6 bis 9, bei der in Strömungsrichtung hinter der Brühvorrichtung (40) ein Wegeventil angeordnet ist, über das die Brühvorrichtung (40) ausgangsseitig wahlweise direkt mit einem Getränkeauslauf (46) verbindbar ist, um frisch gebrühte, heiße Getränke auszugeben, oder alternativ mit dem Wärmetauscher (10), um frisch gebrühte, gekühlte Getränke auszugeben.

## Claims

1. Heat exchanger (10) for a beverage preparation apparatus for the preparation of freshly brewed, cooled beverages, comprising an inner flow path (11) through which the beverage to be cooled can flow and an outer flow path (12) arranged around the inner flow path (11), wherein cooling liquid can flow through an annular space between inner flow path (11) and outer flow path (12) and wherein inner (11) and outer (12) flow path are fluidically separated but are in mutual thermal contact, and comprising an inner body (13) that is arranged in the inner flow path (11), extends in the direction of flow and around which the liquid that is to be cooled can flow within the inner flow path (11),
**characterised in that**
the inner body (13) is made of a food-safe, flexible plastic and the heat exchanger is bent to save space, in particular is wound in the form of a helix.

2. Heat exchanger (10) according to claim 1, which is configured as a tubular heat exchanger, in which the inner (11) and the outer (12) flow path are in the form of tubes, in particular as an inner tube and an outer jacket tube that surrounds it, preferably coaxially.

3. Heat exchanger (10) according to claim 1 or 2, wherein the inner body (13) consists of PFTO or silicone.

4. Heat exchanger (10) according to any one of the preceding claims, wherein the length of the inner (11) and outer (12) flow paths of the heat exchanger (10) is less than 10 m, preferably between 6 m and 2 m, most preferably between 5 and 3 m.

5. Heat exchanger (10) according to any one of the preceding claims, wherein the free volume of the inner flow path (11) through which liquid can flow is less than 1 dl, preferably less than 0.5 dl and most preferably less than 0.2 dl.

6. Beverage preparation apparatus for the preparation of freshly brewed, cooled beverages, comprising a heat exchanger (10) according to any one of the preceding claims, in which the outer flow path (12) can be connected to a fresh water supply (31), so that fresh water can flow through the annular space between inner flow path (11) and outer flow path (12), and wherein the inner flow path (11) can be connected to a brewing apparatus (40) so that freshly brewed beverage can flow through the inner flow path (11).

7. Beverage preparation apparatus according to claim 6, in which fresh water flowing through the annular space is fed to a hot water boiler (20) in which it is held for the preparation of subsequent beverages.

8. Beverage preparation apparatus according to claim 6 or 7, in which the volume of water that flows through the annular space per unit of time corresponds to the volume of beverage that flows through the inner tube (11) in the same time.

9. Beverage preparation apparatus according to any one of claims 6 to 8, wherein a coolant circuit of the heat exchanger (10) is located in the inlet of a water pump (30), the pressure port of which is connected to the hot water boiler (20) and which simultaneously delivers hot water to the brewing apparatus (40) by pressurising the hot water boiler (20).

10. Beverage preparation apparatus according to any one of claims 6 to 9, in which a directional control valve is arranged downstream of the brewing apparatus (40) in the direction of flow, via which directional control valve the brewing apparatus (40) can be selectively connected on the outlet side directly to a beverage outlet (46) in order to dispense freshly brewed, hot beverages, or alternatively to the heat exchanger (10) in order to dispense freshly brewed, cooled beverages.

## Revendications

1. Échangeur de chaleur (10) pour un dispositif de préparation de boissons pour la préparation de boissons fraîchement préparées et réfrigérées, avec une voie d'écoulement intérieure (11) pouvant être traversée par la boisson à refroidir et une voie d'écoulement extérieure (12) disposée autour de la voie d'écoulement intérieure (11), dans lequel un espace annulaire entre la voie d'écoulement intérieure (11) et la voie d'écoulement extérieure (12) peut être traversé par du liquide de refroidissement et dans lequel les voies d'écoulement intérieure (11) et extérieure (12) sont séparées fluidiquement, mais sont en contact thermique mutuel, et avec un corps intérieur (13) disposé dans la voie d'écoulement intérieure (11) et s'étendant dans la direction d'écoulement, qui peut être entouré par l'écoulement du liquide à refroidir à l'intérieur de la voie d'écoulement intérieure (11),
**caractérisé en ce que**
le corps intérieur (13) est constitué d'une matière plastique flexible de qualité alimentaire et l'échangeur de chaleur est cintré de manière à économiser de la place, en particulier est enroulé en forme d'hélice.

2. Échangeur de chaleur (10) selon la revendication 1, lequel est réalisé sous forme d'échangeur de chaleur tubulaire, dans lequel les voies d'écoulement intérieure (11) et extérieure (12) sont réalisées sous forme tubulaire, en particulier sous forme d'un tube intérieur et d'un tube d'enveloppe extérieur entourant celui-ci, de préférence coaxialement.

3. Échangeur de chaleur (10) selon la revendication 1 ou 2, dans lequel le corps intérieur (13) est constitué de PFTO ou de silicone.

4. Échangeur de chaleur (10) selon l'une quelconque des revendications précédentes, dans lequel la longueur des voies d'écoulement intérieure (11) et extérieure (12) de l'échangeur de chaleur (10) est inférieure à 10 m, de préférence entre 6 m et 2 m, plus préférentiellement entre 5 et 3 m.

5. Échangeur de chaleur (10) selon l'une quelconque des revendications précédentes, dans lequel le volume de la voie d'écoulement intérieure (11) pouvant être traversé par du liquide est inférieur à 1 dl, de préférence inférieur à 0,5 dl et plus préférentiellement inférieur à 0,2 dl.

6. Dispositif de préparation de boissons pour la préparation de boissons fraîchement préparées et réfrigérées, avec un échangeur de chaleur (10) selon l'une quelconque des revendications précédentes, dans lequel la voie d'écoulement extérieure (12) peut être connectée à une alimentation en eau fraîche (31), de sorte que l'espace annulaire entre la voie d'écoulement intérieure (11) et la voie d'écoulement extérieure (12) peut être traversé par de l'eau fraîche, et dans lequel la voie d'écoulement intérieure (11) peut être connectée à un dispositif d'infusion (40) de sorte que la voie d'écoulement intérieure (11) peut être traversée par de la boisson fraîchement infusée.

7. Dispositif de préparation de boissons selon la revendication 6, dans lequel de l'eau fraîche s'écoulant à travers l'espace annulaire est acheminée vers un chauffe-eau (20), dans lequel elle est conservée pour la préparation de boissons ultérieures.

8. Dispositif de préparation de boissons selon la revendication 6 ou 7, dans lequel le volume d'eau s'écoulant à travers l'espace annulaire par unité de temps correspond au volume de boisson, lequel s'écoule à travers le tube intérieur (11) pendant le même temps.

9. Dispositif de préparation de boissons selon l'une quelconque des revendications 6 à 8, dans lequel un circuit de liquide de refroidissement de l'échangeur de chaleur (10) se trouve en arrivée d'une pompe à eau (30), dont le raccord de pression est connecté au chauffe-eau (20) et qui achemine simultanément de l'eau chaude vers le dispositif d'infusion (40) par mise sous pression du chauffe-eau (20).

10. Dispositif de préparation de boissons selon l'une quelconque des revendications 6 à 9, dans lequel une soupape à voie est disposée en aval du dispositif d'infusion (40) dans le sens de l'écoulement, par l'intermédiaire duquel le dispositif d'infusion (40) peut être connecté, côté sortie, au choix directement à une sortie de boissons (46) pour distribuer des boissons chaudes fraîchement infusées, ou alternativement à l'échangeur de chaleur (10) pour distribuer des boissons fraîchement infusées et réfrigérées.
